# EUROPÄISCHE PATENTSCHRIFT

(11) **EP 0 671 201 B1**
(45) Veröffentlichungstag und Bekanntmachung des Hinweises auf die Patenterteilung: **03.11.1999**
(21) Anmeldenummer: 95102650.9
(22) Anmeldetag: 24.02.1995
(51) Int. Cl.: B01D 53/86, B01D 53/50

(54) **Verfahren zur Abscheidung von Schwefeltrioxid und zum Betreiben einer katalytischen Entstickungsanlage**
Process for separating sulphurtrioxid and for operating a catalytic denitration device
Procédé pour séparer le trioxyde de soufre et pour conduire un dispositif de dénitration catalytique

(30) Priorität: 11.03.1994 AT 52794
(43) Veröffentlichungstag der Anmeldung: 13.09.1995
(73) Patentinhaber: AUSTRIAN ENERGY & ENVIRONMENT SGP/WAAGNER-BIRO GmbH, A-1211 Wien (AT)
(72) Erfinder: Sula, Manfred, A-1210 Wien (AT)
(74) Vertreter: Rieberer, Stefan, Dipl.-Ing.

(56) Entgegenhaltungen:
- EP-A- 0 534 087
- EP-A- 0 569 877
- EP-A- 0 571 664
- PATENT ABSTRACTS OF JAPAN vol. 004 no. 182 (C-035) ,16.Dezember 1980 & JP-A-55 121826 (SAKAI CHEM IND CO LTD) 19.September 1980,
- PATENT ABSTRACTS OF JAPAN vol. 016 no. 466 (C-0989) ,28.September 1992 & JP-A-04 166214 (SUMITOMO HEAVY IND LTD) 12.Juni 1992,

## Beschreibung

Die Erfindung betrifft ein Verfahren zur Abscheidung von Schwefeloxiden und Stickoxiden aus Rauchgasen, insbesondere aus Rauchgasen einer Müllverbrennungsanlage, bei Nutzung der Wärmeenergie der Rauchgase in zumindest einem Wärmetauscher im Rauchgaskanal und Einbringung von Ammoniak oder ammoniumhältigen Verbindungen.

Zur Rauchgasentstickung bei Kohle- und Ölkraftwerken, aber auch zur Reinigung der Rauchgase in anderen Industriezweigen, werden Verfahren angewendet, bei welchen Stickoxide an Katalysatoren in unschädliche Reaktionsprodukte umgesetzt werden. Das derzeit am häufigsten verwendete Verfahren ist das SCR (Selective Catalytic Reduction) - Verfahren. Dabei wird Ammoniak oder ammoniumhältige Verbindungen in eine auch den Katalysator enthaltende Reaktionskammer eingedüst und die Stickoxide im Rauchgas zu Stickstoff (N₂) und Wasserdampf umgesetzt, sodaß eine Verringerung der Stickoxidkonzentration bis zu 90 % erzielt werden kann. Gleichzeitig können auch, allenfalls unter Zugabe weiterer Reagenzien, die Schwefeloxide im Rauchgas wesentlich vermindert werden.

Ein erster Nachteil der herkömmlichen Verfahrensvarianten besteht nun darin, daß der Katalysator bei relativ hohen Temperaturen (ca. 300°C und höher) betrieben werden muß, da sich ansonst unter den reduktiven Bedingungen das im Rauchgas vorhandene Schwefeltrioxid mit dem Ammonium zu klebrigem Ammoniumhydrogensulfat verbindet, welches bei niedrigen Temperaturen zu Anpackungen am Katalysator und zu Betriebsstörungen führen würde. Wenn nun die Wärmeenergie des Rauchgases zu einem großen Anteil durch Wärmetauscher im Rauchgaskanal genützt wird, ergibt sich dabei eine beträchliche Absenkung der Rauchgastemperatur, sodaß zum Erreichen der relativ hohen Betriebstemperaturen des Katalysators Fremdenergieeinsatz zur Wiedererwärmung des Rauchgases notwendig ist. Schließlich ist durch die Temperaturabsenkung auch die Korrosionsgefahr im und nach dem Luftvorwärmer, insbesondere im Teil- und Niedriglastbereich des Dampferzeugers, deutlich erhöht, da der Taupunkt des Wassers unterschritten wird und damit das Schwefeltrioxid in korrosive Schwefelsäure übergeht. Speziell für Brennstoffe mit hohem Schwefelgehalt sind daher die herkömmlichen Verfahren schlecht anwendbar.

Die in der Schrift EP-A-0.571.664 geoffenbarte Ammoniak-bzw Alkohol-Einbringung erfolgt zwar im Temperaturbereich zwischen 300-700°C, jedoch lagert sich der Ammoniak bzw der Alkohol durch Adsorption an den Heizflächenbelag an, womit dessen katalytische Wirkung für die Oxidation von SO₂ zu SO₃ unterbunden wird. Die JP-A-5512186 offenbart ein Verfahren, bei dem Ammoniak in das Rauchgas mit einer Temperatur zwischen 100 und 300°C eingebracht wird. Der Katalysator zur Denitrifikation soll die Eigenschaft besitzen, wenig SO₂ in SO₃ zu verwandeln, da SO₂ in den Katalysator eingebracht wird.

Die Aufgabe der vorliegenden Erfindung besteht daher darin, mit beliebigen Brennstoffen einen einfachen Betrieb der Anlage über den gesamten Lastbereich des Dampferzeugers sowie einen problemlosen und störungsfreien Betrieb im Luftvorwärmer und den nachgeschalteten Anlagenabschnitten, insbesondere dem Katalysator zu ermöglichen.

Diese Aufgabe wird erfindungsgemäß durch Anspruch 1 gelöst.

Schließlich ergibt sich im Unterschied zu herkömmlichen SCR-High-Dust-Schaltungen der Vorteil, daß über dem Katalysator keine nennenswerte Zunahme der Schwefeltrioxid-Konzentration erfolgt, da die Anlage im Tieftemperaturbereich betrieben werden kann und daher die SO₂/SO₃-Konversion am Katalysator weitgehend reduziert ist.

Das erfindungsgemäße Verfahren eignet sich daher vorzüglich zum Betreiben von Verbrennungsanlagen für Brennstoffe mit hohem Schwefelgehalt (Kohle, Müll, Erdöl, Sonderbrennstoffe), wobei auch im Teillastbereich mit keinen Abscheidungen von klebrigen Ammoniumhydrogensulfat zu rechnen ist.

Eine Erweiterung des zuvor genannten Vorteiles der Korrosionsverhinderung, die insbesondere im Teillastbereich des Kessels zu tragen kommt, wo eine Taupunktunterschreitung bereits in den Economizer-Paketen auftreten könnte, ist dadurch erzielbar, daß zumindest ein Teil der Gesamtmenge an Ammoniak bzw. ammoniumhältigen Verbindungen zwischen allenfalls vorhandenen Überhitzer-Paketen eingedüst wird.

Besonders vorteilhaft wirkt sich das erfindungsgemäße Verfahren auch auf die Regelung für die benötigte Menge an Ammoniak bzw. ammoniumhältigen Verbindungen aus, die für die Reduktion der gesamten Stickoxid- und Schwefeltrioxid-Fracht notwendig ist. Bislang war eine kontinuierliche Überwachung und Regelung bei einer reinen Schwefeltrioxidabscheidung durch Eindüsung von Ammoniak oder ammoniumhältigen Verbindungen vor einem Elektrofilter nicht möglich, da SO₃ nicht kontinuierlich gemessen werden kann.

Gemäß einem zusätzlichen Merkmal der Erfindung wird die Konzentration der Stickoxide im Rauchgas nach dem Passieren des Katalysators ermittelt und die einzudüsende Gesamtmenge an Ammoniak bzw. ammoniumhältigen Verbindungen direkt proportional der ermittelten Konzentration bemessen. Die Ermittlung der Stickoxid-Konzentration im Reingas kann kontinuierlich erfolgen, sodaß eine kontinuierliche Überwachung und damit auch eine kontinuierliche Regelung der Ammoniakeindüsung bzw. der Eindüsung ammoniumhältiger Verbindungen in einfacher Weise möglich ist. Auch die Betriebssicherheit ist dadurch wesentlich erhöht.

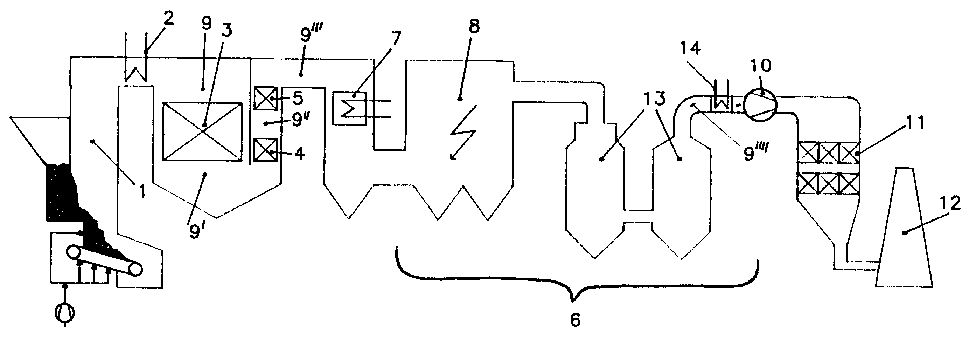

In der nachfolgenden Beschreibung wird unter Bezugnahme auf die ein Anlagenschema darstellende Fig.1 das erfindungsgemäße Verfahren beispielhaft näher erläutert.

Fig. 1 zeigt eine Anlage zur Müllverbrennung mit anschließender Rauchgasreinigung. Der Müll wird in den Dampferzeuger 1 eingebracht und am Rost verbrannt. Die entstehenden Rauchgase werden im Dampferzeuger 1 abgekühlt, wobei Heizflächen 2, 3, 4 und 5 vorgesehen sind, wobei die Heizfläche 3 als Überhitzer, 4 als Economizer und 5 als Luftvorwärmer ausgebildet ist. Eventuell kann noch vor der Rauchgasreinigung 6 eine weitere Heizfläche 7, beispielsweise für die Luftvorwärmung vorgesehen werden, sodaß das Elektrofilter 8 der Rauchgasanlage 6 im optimalen Temperaturbereich betrieben werden kann.

Zwischen den Heizflächen 2, 3, 4, 5 und 7 können Eindüsstationen 9, 9', 9'' und 9''' angeordnet werden, durch welche Ammoniak oder ammoniakhältige Substanzen in den Rauchgasstrom eingebracht und insbesondere durch die nachgeschaltete Heizfläche mit dem Rauchgasstrom durchmischt wird, sodaß eine gleichmäßige Reaktion des Ammoniaks mit dem im Rauchgasstrom vorhandenen SO₃ zu Ammoniumsulfat, welches in der nachgeschalteten Rauchgasreinigungsanlage 6, insbesondere im Elektrofilter 8, aus dem Rauchgasstrom entfernt wird, sodaß das Rauchgas mit dem überschüssigen Ammoniak bzw. den noch einzudüsenden Ammoniak 9'''' praktisch staubfrei über das Saugzuggebläse 10 in die katalytische Entstickungsanlage 11 eingeleitet werden kann und von dieser über den Kamin 12 in die Atmosphäre geblasen wird. In der Rauchgasreinigungsanlage 6 kann als zweite Reinigungsstufe ein Wascher 13, insbesondere in zwei Stufen, vorgesehen werden, in welchem die restlichen Schadstoffe ausgewaschen werden, wobei mindestens 1 Stufe des Wäschers mit einer Suspension betrieben wird, insbesondere Kalksteinsuspension, sodaß noch nicht abgebundene Schwefeloxide absorptiv aus dem Rauchgasstrom entfernt werden können. Der Wäscher 13 hat allerdings die negative Eigenschaft, daß das Rauchgas bis auf etwa 50° C abgekühlt werden kann, wodurch die katalytische Entstickung behindert wird. Zu diesem Zweck ist ein Rauchgastrockner 14 vor dem Saugzugebläse 10 vorgesehen, durch welchen das Rauchgas durch Temperaturerhöhung getrocknet wird und die für den Katalysator notwendige Mindesttemperatur von etwa 170° C erreicht. Nach dem Katalysator wird die im Rauchgas noch vorhandene Stickoxidmenge kontinuierlich gemessen und aufgrund dieser Messung die Einblasung des Ammoniaks geregelt, sodaß der zulässige Grenzwert an NOₓ unterschritten wird.

Durch die Eindüsung des Ammoniaks in die noch relativ heißen Rauchgase wird einerseits eine lange Kontaktzeit zum Binden des SO₃'s erreicht, wobei gleichzeitig eine intensive Durchmischung erfolgt, sodaß die Zerlegung des NOₓ im Katalysator problemlos erfolgt. Durch die Eindüsung an mehreren Stellen läßt sich ferner die Ammoniumhydrogensulfatbildung beeinflussen, die insoweit unangenehm ist, daß die entstehende feste Verbindung an den nachgeschalteten Einrichtungen der Abgasbehandlungsanlage ankleben kann, sodaß Störungen und Korrosionen zu erwarten sind. Dieser Nachteil läßt sich durch die Einblasung an mehreren Stellen bekämpfen, sodaß nur staubförmiges Ammoniumsulfat entsteht, welches im Elektrofilter 8 abgeschieden werden kann.

Die vorliegende Erfindung ist nicht auf die Anwendung in Müllverbrennungskesseln beschränkt, sondern kann auch bei konventionellen Kraftwerkskesseln die mit schwefelhältiger Kohle oder Öl beheizt werden, angewendet werden.

## Patentansprüche

1. Verfahren zur Abscheidung von Schwefeloxiden und Stickoxiden aus Rauchgasen, insbesondere aus Rauchgasen einer Müllverbrennungsanlage, bei Nutzung der Wärmeenergie der Rauchgase in zumindest einem Wärmetauscher im Rauchgaskanal und Einbringung von Ammoniak oder ammoniumhältigen Verbindungen,
bei welchem der Ammoniak bzw die ammoniumhältigen Verbindungen an mehreren Stellen, die in verschiedenen Temperaturbereichen des Rauchgasstroms liegen und von welchen sich eine Stelle vor einem Wärmetauscher-Paket befindet, in den Rauchgasstrom eingebracht werden,
bei welchem der Ammoniak bzw die ammoniumhältigen Verbindungen mit dem SO₃ zu Ammoniumsulfat reagieren,
bei welchem das Rauchgas, insbesondere in einem Elektrofilter, entstaubt wird,
bei welchem das entstaubte Rauchgas in einem Naßwäscher von den restlichen Schwefeloxiden befreit wird und in einer nachgeschalteten Rauchgastrocknung durch Erwärmung getrocknet wird und
bei welchem das entstaubte und von Schwefeloxiden befreite Rauchgas in eine katalytische Entstickungsanlage eingeführt wird, wobei die katalytische Entstickung im Niedertemperaturbereich, insbesondere zwischen 170 und 280° C, betrieben wird.

2. Verfahren nach Anspruch 1, **dadurch gekennzeichnet, daß** ein Teil des Ammoniaks bzw der ammoniumhältigen Verbindungen vor einem Luftvorwärmer eingebracht wird.

3. Verfahren nach Anspruch 1, **dadurch gekennzeichnet, daß** ein Teil des Ammoniaks bzw. der ammoniumhältigen Verbindungen zwischen mehreren oder vor einem Economizer eingebracht wird.

4. Verfahren nach Anspruch 1, **dadurch gekennzeichnet, daß** ein Teil des Ammoniaks bzw. der ammoniumhältigen Verbindungen zwischen Überhitzerheizflächen eingebracht wird.

5. Verfahren nach Anspruch 1, **dadurch gekennzeichnet, daß** die Konzentration der Stickoxide im Rauchgas nach dem Passieren des Katalysators ermittelt und die einzudüsende Gesamtmenge an Ammoniak bzw. ammoniumhältigen Verbindungen direkt proportional der ermittelten Konzentration bemessen wird.

6. Verfahren nach Anspruch 1, **dadurch gekennzeichnet, daß** der Ammoniak oder die ammoniumhältigen Verbindungen an mehreren Stellen in einem Rauchgasbereich zwischen 200°C und 450°C eingebracht werden.

7. Verfahren nach Anspruch 1, **dadurch gekennzeichnet, daß** der Ammoniak oder die ammoniumhältigen Verbindungen zum Betrieb der katalytischen Entstickungsanlage zumindest teilweise in einen Rauchgastemperaturbereich zwischen 50° und 200° C nach dem Naßwäscher der Rauchgasreinigungsanlage aber vor der Rauchgastrocknung mit anschließender katalytischen Entstickung eingebracht wird.

## Claims

1. Process for separating sulphuroxides and nitrous oxides from flue gases, particularly from flue gases of a refuse incinerator, making use of the heat energy of the flue gases within the flue gas channel of at least one heat exchanger, and introducing ammonia or ammonium containing compounds,
wherein the ammonia or the ammonium containing compounds are introduced into the stream of flue gases at a plurality of locations situated within different temperature regions of the stream of flue gases, one of said locations being prior to a heat exchanger package,
wherein the ammonia or the ammonium containing compounds react with the SO₃ to form ammonium sulphate,
wherein said flue gas is de-dusted, particularly in an electrical precipitator,
wherein the de-dusted flue gas is freed from residual sulphuroxides in a scrubber and is dried by heating in a postponed flue gas drier, and
wherein the de-dusted flue gas freed from sulphuroxides is introduced into a catalytic denitration device, said catalytic denitration device being operated in a low temperature range, particularly between 170 and 280°C.

2. Process according to claim 1, **characterised in that** part of the ammonia or the ammonium containing compounds is introduced prior to an air pre-heater.

3. Process according to claim 1, **characterised in that** part of the ammonia or the ammonium containing compounds is introduced between several or prior to an economiser.

4. Process according to claim 1, **characterised in that** part of the ammonia or the ammonium containing compounds is introduced between heating surfaces of a superheater.

5. Process according to claim 1, **characterised in that** the concentration of the nitrous oxides in the flue gas is determined after passing the catalyst, and the total amount of ammonia or the ammonium containing compounds to be introduced by nozzle is proportioned in direct proportion to the concentration determined.

6. Process according to claim 1, **characterised in that** the ammonia or the ammonium containing compounds are introduced at several locations in a flue gas region of between 200°C and 450°C.

7. Process according to claim 1, **characterised in that** the ammonia or the ammonium containing compounds, for operating the catalytic denitration device, is introduced at least in part into a flue gas region of between 50° and 200°C after the scrubber of the flue gas cleaning device, but prior to flue gas drying with subsequent catalytic denitration.

## Revendications

1. Procédé de séparation des oxydes de soufre et des oxydes d'azote, à partir des gaz de fumées, en particulier à partir des gaz de fumées d'une installation d'incinération d'ordures, avec utilisation de l'énergie thermique des gaz de fumées dans au moins un échangeur de chaleur, installé dans le canal à gaz de fumées, et introduction d'ammoniaque ou de combinaisons contenant de l'ammonium,
pour lequel l'ammoniaque, respectivement les combinaisons contenant de l'ammonium, sont introduites dans le flux de gaz de fumées en plusieurs emplacements, situés dans différentes plages de température du flux de gaz de fumées, et dont un emplacement se trouve en amont d'un paquet d'échangeurs de chaleur,
dans lequel l'ammoniaque, respectivement, les combinaisons contenant de l'ammonium, réagissent avec le SO₃ pour donner du sulfate d'ammonium,
pour lesquels les gaz de fumées, en particulier dans un électrophiltre, sont dépoussiérés,
dans lequel les gaz de fumées dépoussiérés sont débarrassés du reste des oxydes de soufre, par passage dans un laveur humide, et séchés par chauffage dans un dispositif de séchage de gaz de fumées installé en aval, et
dans lequel les gaz de fumées, dépoussiérés et débarrassés des oxydes de soufre, sont introduits dans une installation de dénitruration catalytique, la dénitruration catalytique étant pratiquée dans une plage de basse température, en particulier entre 170 et 280°C.

2. Procédé selon la revendication 1, caractérisé en ce qu'une partie de l'ammoniaque, respectivement des combinaisons contenant de l'ammonium, est introduite en amont d'un préchauffeur d'air.

3. Procédé selon la revendication 1, caractérisé en ce qu'une partie de l'ammoniaque, respectivement des combinaisons contenant de l'ammonium, est introduite entre plusieurs économiseurs, ou en amont d'un économiseur.

4. Procédé selon la revendication 1, caractérisé en ce qu'une partie de l'ammoniaque, respectivement des combinaisons contenant de l'ammonium, est introduite entre des surfaces de chauffe d'un surchauffeur.

5. Procédé selon la revendication 1, caractérisé en ce que la concentration des oxydes d'azote dans les gaz de fumées après le passage dans le catalyseur est déterminée, et la quantité globale à insuffler d'ammoniaque, respectivement de combinaisons contenant de l'ammonium, est quantifié d'une façon directement proportionnelle à la concentration déterminée.

6. Procédé selon la revendication 1, caractérisé en ce que l'ammoniaque ou les combinaisons contenant de l'ammonium sont introduites en plusieurs emplacements, dans une plage de température des gaz de fumées comprise entre 200°C et 450°C.

7. Procédé selon la revendication 1, caractérisé en ce que l'ammoniaque ou les combinaisons contenant de l'ammonium, pour le fonctionnement de l'installation catalytique de dénitruration, sont introduites au moins partiellement dans une plage de températures de gaz de fumées comprise entre 50° et 200°C, en aval du laveur humide de l'installation de d'épuration des gaz de fumées, mais en amont du séchage des gaz de fumées, avec une dénitruration catalytique subséquente.
